# EUROPÄISCHE PATENTSCHRIFT

(11) **EP 0 551 819 B1**
(45) Veröffentlichungstag und Bekanntmachung des Hinweises auf die Patenterteilung: **06.12.1995**
(21) Anmeldenummer: 93100078.0
(22) Anmeldetag: 05.01.1993
(51) Int. Cl.: C09D 175/02, C08G 18/30, C08J 7/04, B60K 15/03, C08G 18/78, C08G 18/79

(54) **Verwendung von feuchtigkeitshärtenden Lacken auf Basis organischer Polyisocyanate zur Innenbeschichtung von Kunststofftanks**
Use of moisture-curable lacquers on the basis of organic poly-isocyanates for coating the inside of plastic tanks
Utilisation de vernis durcissables par humidité à base de poly-isocyanates organiques pour le revêtement de l'intérieur de réservoirs en matière plastique

(30) Priorität: 16.01.1992 DE 4200906
(43) Veröffentlichungstag der Anmeldung: 21.07.1993
(73) Patentinhaber: BAYER AG, 51368 Leverkusen (DE); CARL DIEDERICHS & CO. GmbH, D-40225 Düsseldorf (DE); Vestolen GmbH, 45896 Gelsenkirchen (DE)
(72) Erfinder: Hense, Michael, W-4000 Düsseldorf (DE); Rummel, Rolf, W-4005 Meerbusch 1 (DE); Zöllner, Franz-Ferdinand, W-5090 Leverkusen 1 (DE); Kubitza, Werner, Dipl.-Ing., W-5090 Leverkusen 3 (DE); Henning, Wolfgang, Dr., W-5067 Kürten (DE)
(74) Vertreter: Steiling, Lothar, Dr.

(56) Entgegenhaltungen:
- EP-A- 0 085 309
- EP-A- 0 170 305
- DE-A- 3 435 992

## Beschreibung

Die Erfindung betrifft die Verwendung von feuchtigkeitshärtenden Lacken auf Basis organischer Polyisocyanate zur Innenbeschichtung von Polyolefin-Kunststofftanks, insbesondere von Treibstofftanks auf Basis dieser Kunststoffe und einen eine derartige Beschichtung aufweisenden Treibstofftank.

Die Verwendung von Polyolefin-Kunststoffen für die Herstellung von Treibstofftanks ist bekannt. Es ist auch bekannt, daß solche Treibstoff-Behälter zur Erzielung äußerster Dichtigkeit, das heißt, zur Verhinderung einer Diffusion des Treibstoffes nach außen, einer Oberflächenbehandlung auf der Innenseite der Wand bedürfen. Eine Behandlung der Oberfläche mit Fluor oder Fluor-Verbindungen bringt einerseits den Effekt einer Diffusionsbremse, sie hat andererseits den Nachteil nicht ausreichender Umweltfreundlichkeit, da bei der thermischen Recyclisierung des Kunststoffes eine Emission von Fluorwasserstoff erfolgt.

Eine Beschichtung der Tankinnenflächen mit halogenfreien Beschichtungsstoffen würde diesen Nachteil beheben. Sie scheiterte bisher jedoch immer daran, daß zum einen durch die Verwendung konventioneller, also organischer Lösemittel enthaltender Beschichtungsmittel wiederum eine Emissionsquelle für Schadstoffe vorliegt, zum anderen auch daran, daß die Haftfestigkeit der üblichen organischen Lackfilme auf Polyolefin-Oberflächen bei dauernder Einwirkung von Treibstoffen selbst dann nicht in praktisch verwertbarem Maße gegeben sind, wenn eine Vorbehandlung der Flächen z.B. mittels Korona-Entladung, Plasma-Bestrahlung u.dgl. vorgenommen wird.

Es wurde nun überraschend gefunden, daß die nachstehend detailliert beschriebenen feuchtigkeitshärtenden, lösemittelfreien erfindungsgemäßen Beschichtungsmittel, welche im wesentlichen aus bestimmten, bei Raumtemperatur flüssigen Polyisocyanaten bestehen, hervorragend für die Innenbeschichtung von Kunststofftanks aus Polyolefinen für flüssige Kohlenwasserstoffe, insbesondere für Treibstoffe geeignet sind, da sie selbst bei Dauerbelastung durch derartige Kohlenwasserstoffe über ein ausgezeichnetes Haftvermögen verfügen, die erforderliche Kohlenwasserstoff-Beständigkeit aufweisen und somit eine Permeation der flüssigen Kohlenwasserstoffe, insbesondere Treibstoffe, nach außen unterbinden.

Diese Beobachtung ist auch im Hinblick auf die Lehre der DE-OS 2 845 514 überraschend, da gemäß dieser Veröffentlichung als Bindemittel für lösemittelfreie Einkomponenten-Polyurethanlacke Gemische aus Lackpolyisocyanaten mit bestimmten Monoisocyanaten eingesetzt werden müssen, und da in der Veröffentlichung bezüglich der Eignung der dort beschriebenen Gemische speziell zur Innenbeschichtung von Polyolefin-Kohlenwasserstofftanks keine Aussagen gemacht werden.

Die gleiche Aussage rechtfertigt sich im Hinblick auf die Lehre der EP-A 0 085 309, die sich auf die Beschichtung von Flächengebilden aus PVC bezieht, nicht jedoch auf die Innenbeschichtung von Kohlenwasserstofftanks aus Polyolefin-Kunststoffen, so daß dieser Vorveröffentlichung keinerlei Hinweise auf die Lösung der erfindungsgemäßen Aufgabe zu entnehmen sind, dies vor allem auch, weil die Lackierung von vergleichsweise polaren PVC-Oberflächen keinerlei Rückschlüsse auf die Lackierbarkeit von vergleichsweise unpolaren Polyolefin-Oberflächen, die bekanntlich nur schwer lackierbar sind, zulassen.

Gegenstand der Erfindung ist die Verwendung von, unter dem Einfluß von Feuchtigkeit aushärtbaren, bei 23^{°}C eine Viskosität von 60 bis 2.500 mPa.s aufweisenden Lacken, bestehend im wesentlichen aus
a) mindestens einem bei Raumtemperatur flüssigen Biuret-, Isocyanurat-, Uretdion- und/oder Allophanatgruppen aufweisenden Lackpolyisocyanat auf Basis von Hexamethylendiisocyanat mit einem NCO-Gehalt von mindestens 10 Gew.-%,
b) 0 bis 5 Gew.-% bezogen auf Gesamtmischung, gegenüber Isocyanatgruppen inerten Lacklösungsmitteln und gegebenenfalls
c) in Lackformulierungen üblichen, gegenüber Isocyanatgruppen inerten Hilfs- und Zusatzmitteln,
zur Innenbeschichtung von Polyolefin-Kunststofftanks für flüssige Kohlenwasserstoffe, insbesondere Treibstoffe wie insbesondere Benzin oder Dieseltreibstoff.

Gegenstand der Erfindung ist auch ein Treibstofftank insbesondere für Benzin oder Dieseltreibstoff aus Polyolefin-Kunststoff, gekennzeichnet durch eine Innenlackierung auf Polyharnstoff-Basis, die unter Verwendung von unter dem Einfluß von Feuchtigkeit aushärtbaren, bei 23°C eine Viskosität von 60 bis 2.500 mPa.s aufweisenden Lacken, bestehend aus
a) mindestens einem bei Raumtemperatur flüssigen Biuret-, Isocyanurat-, Uretdion- und/oder Allophanatgruppen aufweisenden Lackpolyisocyanat auf Basis von Hexamethylendiisocyanat mit einem NCO-Gehalt von mindestens 10 Gew.-%,
b) 0 bis 5 Gew.-% bezogen auf Gesamtmischung, gegenüber Isocyanatgruppen inerten Lacklösungsmitteln und gegebenenfalls
c) in Lackformulierungen auf Polyisocyanat-Basis üblichen, gegenüber Isocyanatgruppen inerten Hilfs- und Zusatzmitteln
und anschließender Aushärtung der Beschichtungen unter dem Einfluß von Feuchtigkeit hergestellt worden ist.

Die erfindungsgemäß zu verwendenden Lacke weisen bei 23°C eine Viskosität von 60 bis 2.500 mPa.s, bevorzugt 100 bis 1.000 mPa.s, auf. Da es sich bei den erfindungsgemäß zu verwendenden Lacken vorzugsweise um lösemittelfreie Systeme handelt, entspricht vorzugsweise auch die in den Formulierungen als Hauptkomponente vorliegende Polyisocyanat-Komponente diesen Viskositätsbedingungen.

Bei der Komponente a) der erfindungsgemäß zu verwendenden Lacke handelt es sich um "Lackpolyisocyanate", das heißt insbesondere um (i) Allophanat-, (ii) Biuret-, (iii) Isocyanurat- oder (iv) Isocyanurat- und Uretdiongruppen aufweisende Lackpolyisocyanate auf Basis von Hexamethylendiisocyanat oder Abmischungen derartiger Lackpolyisocyanate. Die Lackpolyisocyanate weisen eine mittlere NCO-Funktionalität von über 2, vorzugsweise von 2,1 bis 6 und insbesondere von 2,5 bis 4, einen NCO-Gehalt von mindestens 10 Gew.-%, vorzugsweise von 20 bis 25 Gew.-% und einen Gehalt an freiem Hexamethylendiisocyanat von unter 0,5 Gew.-% auf.

Die Herstellung der Lackpolyisocyanate a) erfolgt durch an sich bekannte Modifizierung von Hexamethylendiisocyanat unter Biuret-, Allophanat- oder Isocyanurat-Bildung beziehungsweise unter gleichzeitiger Isocyanurat- und Uretdionbildung, wobei jeweils nach der Modifizierungsreaktion eventuell noch vorliegende Überschüsse an nicht modifiziertem monomeren Ausgangsisocyanat in an sich bekannter Weise vorzugsweise durch Destillation so entfernt werden, daß die genannte Obergrenze von 0,5 Gew.-% unterschritten wird.

Die Herstellung der Biuretgruppen-aufweisenden Polyisocyanate kann beispielsweise in an sich bekannter Weise unter Verwendung von Biuretisierungsmitteln wie tert.-Butanol oder durch Umsetzung von Hexamethylendiisocyanat mit unterschüssigen Mengen an Hexamethylendiamin unter Biuretbildung erfolgen.

Die Herstellung der Allophanatgruppen-aufweisenden Polyisocyanate kann beispielsweise durch Umsetzung von Hexamethylendiisocyanat mit einfachen Alkoholen wie z.B. Methanol, Ethanol, Propanol, Butanol u.a. über die Zwischenstufe der entsprechenden Urethangruppen aufweisenden Modifizierungsprodukte erfolgen.

Die Herstellung der Isocyanuratgruppen aufweisenden Polyisocyanate erfolgt in an sich bekannter Weise unter Verwendung von geeigneten Trimerisierungskatalysatoren wie beispielsweise quaternären Ammoniumbasen.

Die Hersteller der Isocyanurat- und Uretdiongruppen-aufweisenden Polyisocyanate erfolgt durch die an sich bekannte Oligomerisierung von Hexamethylendiisocyanat in Gegenwart von Phosphinkatalysatoren.

Die erfindungsgemäß, besonders bevorzugt als Komponente a) eingesetzten Lackpolyisocyanate sind diese zuletzt genannten, sowohl Isocyanurat- als auch Uretdiongruppen aufweisenden Polyisocyanatgemische, in denen das Mol-Verhältnis von Isocyanuratgruppen zu Uretdiongruppen im allgemeinen zwischen 80:20 und 20:80 liegt, und die bei 23°C eine Viskosität von 100 bis 1.000 mPa.s aufweisen.

Die erfindungsgemäß zu verwendenden Lacke können zur Einstellung der Viskosität erforderlichenfalls geringe Mengen an, gegenüber Isocyanatgruppen inerten Lösungsmitteln b), vorzugsweise in Mengen von 0 bis 5 Gew.-%, bezogen auf Gesamtmischung, enthalten. Beispiele derartiger Lösungsmitteln sind n-Butylacetat, Methylethylketon, Methyl-isobutylketon, 2-Methoxypropylacetat, Toluol , Xylol oder Gemische derartiger Lösungsmittel. Vorzugsweise handelt es sich bei den erfindungsgemäß zu verwendenden Lacken jedoch um lösungsmittelfreie Systeme.

Die erfindungsgemäß zu verwendenden Lacke können außer diesen Komponenten gegebenenfalls auch noch weitere, in Lackformulierungen, insbesondere solchen auf Polyisocyanat-Basis übliche inerte Hilfs- und Zusatzmittel c) enthalten. Hierzu gehören beispielsweise Verlaufshilfsmittel, Entschäumer, Katalysatoren für die Isocyanat-Wasser-Reaktion, insbesondere organische Zinnverbindungen der an sich bekannten Art, wie z.B. Dibutylzinndilaurat oder die Elastizität erhöhende Weichmacheröle beziehungsweise -harze. Falls erwünscht oder erforderlich können die Lacke mit üblichen Füllstoffen oder Pigmenten gegebenenfalls zusammen mit üblichen Pigment-Trocknungsmitteln versehen werden.

Bei den erfindungsgemäß innen zu beschichtenden Kunststofftanks handelt es sich um solche aus Polyolefin-Kunststoffen. Hierunter sind insbesondere Polymerisate und Copolymerisate von Ethylen, Propylen und/oder den isomeren Butenen zu verstehen, die gegebenenfalls geringe Mengen an Monomeren mit funktionellen Gruppen wie beispielsweise Acryl- oder Methacrylsäure in einpolymerisierter Form enthalten können. Besonders bevorzugt handelt es sich bei den erfindungsgemäßen Substraten um solche auf Basis von Ethylen-Buten-Copolymerisaten. Beispielhaft genannt sei das Handelsprodukt der Fa. Hüls AG ®Vestolen AX 4013.

Vor der Innenbeschichtung werden die Innenwände der Tanks zwecks Optimierung der Haftfestigkeit in geeigneter Weise vorbehandelt. Geeignete Vorbehandlungsverfahren sind z.B. die Koronaentladung und bevorzugt die Plasma-Bestrahlung.

Die erfindungsgemäß zu verwendenden Lacke können nach den üblichen Applikationsmethoden aufgetragen werden, für die erfindungsgemäße Verwendung eignet sich jedoch besonders bevorzugt eine Applikation nach dem Schleuderverfahren. Dabei wird eine bestimmte Menge des Lackes in den Tank gefüllt und durch Schleudern so in Bewegung gebracht, daß alle Stellen der inneren Oberfläche einwandfrei benetzt werden. Um auch schwieriger zu erreichende Segmente der inneren Oberfläche des Tanks zu erreichen, kann man an der Außenseite dieser Segmente Infrarotstrahlungsquellen ansetzen, wodurch die Viskosität des Beschichtungsmittels sinkt, das Fließvermögen also verbessert wird. Ein ähnlicher Effekt kann auch durch Ultraschall erreicht werden.

Die erfindungsgemäß zu verwendenden Lacke sind bei Ausschluß von Luftfeuchtigkeit lagerbeständig und härten durch den Einfluß von Feuchtigkeit zu zähelastischen Filmen beziehungsweise Beschichtungen aus. Die für den Raktionsablauf erforderliche Feuchtigkeit kann als Luftfeuchte zur Verfügung stehen, es ist jedoch auch möglich, z.B. bei kontinuierlichen Verarbeitungsanlagen, die erforderliche Feuchtigkeit als Wasserdampf künstlich zuzuführen.

Die erfindungsgemäß zu verwendenden Lacke werden im allgemeinen in solchen Mengen eingesetzt, daß Naßfilmstärken von 40 bis 100 »m resultieren.

Die Aushärtung der bei der erfindungsgemäßen Verwendung enthaltenden Beschichtungen erfolgt vorzugsweise bei Raumtemperatur, sie kann jedoch auch forciert bei erhöhten Temperaturen beispielsweise bei 100 bis 180°C innerhalb weniger Minuten durchgeführt werden. Zur Erhöhung der Reaktionsgeschwindigkeit (Trocknung bzw. Härtung) empfiehlt sich dabei jedoch die Zuführung von Wasserdampf.

### Beispiele

In den nachfolgenden Beispielen sind folgende Polyisocyanate verwendet worden:

### Polyisocyanat A

Im wesentlichen aus Tris(isocyanatohexyl)-biuret bestehendes Biuret-Polyisocyanat-Gemisch, hergestellt durch Biuretisierung von Hexamethylendiisocyanat gemäß US-PS 3 903 127 unter anschließender destillativer Entfernung von überschüssigem Hexamethylendiisocyanat. NCO-Gehalt = 23,5 Gew.-%. Gehalt an freiem Hexamethylendiisocyanat < 0,5 Gew.-%, mittlere NCO-Funktionalität > 3. Viskosität: 2.400 mPa^{.}s/23°C.

### Polyisocyanat B

Gemisch bestehend im wesentlichen aus Tris(-isocyanatohexyl)-isocyanurat und Bis-(isocyanatohexyl-uretdion, hergestellt durch phosphinkatalysierte Oligomerisation von Hexamethylendiisocyanat unter anschließender destillativer Entfernung von überschüssigem Hexamethylendiisocyanat. NCO-Gehalt: 22,0 Gew.-%, Gehalt an Hexamethylendiisocyanat < 0,5 Gew.-%, mittlere NCO-Funktionalität: 2,7, Viskosität: 200 mPa^{.}s/23°C.

### Beispiel 1

37,7 Gew.-Tle Polyisocyanat A, 37,7 Gew.-Tle Polyisocyanat B und 3,5 Gew.-Tle eines handelsüblichen Pigment-Trocknungsmittels (Zusatzmittel TI der Bayer AG Leverkusen ((Toluylsulfonylmonoisocyanat)) werden unter einem Rührer mit Dissolverscheibe homogen verrührt.

Anschließend werden 0,4 Gew.-Tle eines handelsüblichen Kieselsäure-Derivates (Aerosil 972, Degussa AG, Frankfurt) sowie 19,8 Gew.-Tle eines handelsüblichen Talkum-Typs eingerührt.

Zur Benetzung der anorganischen Bestandteile wird nun die Umdrehungszahl der Dissolverscheibe auf 10 bis 15 m/sec erhöht und ca. 10 bis 20 Minuten belassen. Man läßt den Ansatz nun auf Raumtemperatur abkühlen und setzt dann unter langsamen Rühren 0,5 Gew.-Tle eines handelsüblichen Entschäumers (z.B. Byk 351, Fa. Byk in Wesel) sowie als Beschleuniger 0,4 Gew.-Tle Dibutylzinndilaurat zu. Man erhält so einen verarbeitungsfertigen, lagerstabilen, feuchtigkeitshärtenden Einkomponentenlack.

Für Testzwecke werden Prüfplatten aus ®Vestolen AX 4013, die vorab durch Plasma-Bestrahlung vorbehandelt worden sind, so mit dem Lack beschichtet, daß Naßfilmaufträge von 40 bis 100 »m resultieren. Bei Raumtemperatur und 50 % relativer Luftfeuchtigkeit wird Staubtrocknung nach 2 h und Grifftrocknung nach 5 h erreicht. Die Haftung auf dem vorbehandelten Untergrund ist sehr gut. Bei mehrtägiger Lagerung in Superbenzin konnte keine Veränderung festgestellt werden.

### Beispiel 2

Beispiel 2 entspricht Beispiel 1 mit dem Unterschied, daß als Bindemittelkomponente nur Polyisocyanat B zum Einsatz gelangt. Aufgrund der geringeren Viskosität von Polyisocyanat B verringert sich auch die Viskosität der gesamten Formulierung. Die Staubtrocknung der aufgetragenen Filme verlängert sich aufgrund der geringeren Reaktivität von Polyisocyanat B auf 3 bis 4 Stunden, die Drucktrocknung (=Grifftrocknung) auf ca. 6 Stunden.

Die Haftung auf dem beschriebenen Polyolefin-Kunststoff ist sehr gut. Die Kraftstoff-Permeation betrug auf dem beschichteten Polyolefin-Kunststoff nur 0,15 bis 0,25 % im Vergleich zu einer entsprechenden, unlackierten Kunststoffläche.

## Patentansprüche

1. Verwendung von, unter dem Einfluß von Feuchtigkeit aushärtbaren, bei 23°C eine Viskosität von 60 bis 2.500 mPa.s aufweisenden Lacken, bestehend im wesentlichen aus
a) mindestens einem bei Raumtemperatur flüssigen Biuret-, Isocyanurat-, Uretdion- und/oder Allophanatgruppen aufweisenden Lackpolyisocyanat auf Basis von Hexamethylendiisocyanat mit einem NCO-Gehalt von mindestens 10 Gew.-%,
b) 0 bis 5 Gew.-% bezogen auf Gesamtmischung, gegenüber Isocyanatgruppen inerten Lacklösungsmitteln und gegebenenfalls
c) in Lackformulierungen üblichen, gegenüber Isocyanatgruppen inerten Hilfs- und Zusatzmitteln,
zur Innenbeschichtung von Polyolefin-Kunststofftanks für flüssige Kohlenwasserstoffe.

2. Verwendung gemäß Anspruch 1 zur Innenbeschichtung von Treibstofftanks aus Polyolefin-Kunststoffen.

3. Verwendung gemäß Anspruch 1 und 2, dadurch gekennzeichnet, daß der Lack bei 23°C eine Viskosität von 100 bis 1.000 mPa.s aufweist.

4. Treibstofftank aus Polyolefin-Kunststoff, gekennzeichnet durch eine Innenlackierung auf Polyharnstoff-Basis, die unter Verwendung von unter dem Einfluß von Feuchtigkeit aushärtbaren, bei 23°C eine Viskosität von 60 bis 2.500 mPa.s aufweisenden Lacken, bestehend aus
a) mindestens einem bei Raumtemperatur flüssigen Biuret-, Isocyanurat-, Uretdion- und/oder Allophanatgruppen aufweisenden Lackpolyisocyanat auf Basis von Hexamethylendiisocyanat mit einem NCO-Gehalt von mindestens 10 Gew.-%,
b) 0 bis 5 Gew.-% bezogen auf Gesamtmischung, gegenüber Isocyanatgruppen inerten Lacklösungsmitteln und gegebenenfalls
c) in Lackformulierungen auf Polyisocyanat-Basis üblichen, gegenüber Isocyanatgruppen inerten Hilfs- und Zusatzmitteln
und anschließender Aushärtung der Beschichtungen unter dem Einfluß von Feuchtigkeit hergestellt worden ist.

## Claims

1. The use of lacquers which harden under the influence of moisture and which have a viscosity at 23°C of 60 to 2500 mPa.s, consisting substantially of
a) at least one lacquer polyisocyanate containing biuret, isocyanurate, uretdione and/or allophanate groups which is liquid at room temperature and which is based on hexamethylene diisocyanate and has an NCO content of at least 10% by weight,
b) 0 to 5% by weight, with respect to the total mixture, of lacquer solvents which are inert to isocyanate groups, and optionally
c) auxiliary agents and additives which are customary in lacquer formulations and which are inert to isocyanate groups,
for coating the inside of polyolefine plastic tanks for liquid hydrocarbons.

2. A use according to claim 1 for coating the inside of fuel tanks made of polyolefine plastics.

3. A use according to claims 1 and 2, characterised in that the lacquer has a viscosity of 100 to 1000 mPa.s at 23°C.

4. A fuel tank made of polyolefine plastic, characterised by an internal lacquer coating based on polyurea which is produced using lacquers which harden under the influence of moisture, which have a viscosity of 60 to 2500 mPa.s at 23°C, and which consist of
a) at least one lacquer polyisocyanate containing biuret, isocyanurate, uretdione and/or allophanate groups which is liquid at room temperature and which is based on hexamethylene diisocyanate and has an NCO content of at least 10% by weight,
b) 0 to 5% by weight, with respect to the total mixture, of lacquer solvents which are inert to isocyanate groups, and optionally
c) auxiliary agents and additives which are customary in lacquer formulations based on polyisocyanate and which are inert to isocyanate groups,
and subsequent hardening of the coatings under the influence of moisture.

## Revendications

1. Utilisation de vernis, durcissables sous l'action de l'humidité, ayant à 23°C une viscosité de 60 à 2 500 mPa.s et consistant essentiellement en :
a) au moins un polyisocyanate pour vernis, liquide à température ambiante, contenant des groupes biuret, isocyanurate, uretdione, et/ou allophanate, à base de l'hexaméthylènediisocyanate, à une teneur en NCO d'au moins 10 % en poids,
b) 0 à 5 % du poids du mélange total, de solvants pour vernis, inertes à l'égard des groupes isocyanates, et le cas échéant
c) des produits auxiliaires et additifs usuels dans les compositions de vernis, inertes à l'égard des groupes isocyanantes,
pour le revêtement intérieur de réservoirs en résines synthétiques de polyoléfines pour hydrocarbures liquides.

2. Utilisation selon la revendication 1 pour le revêtement intérieur de réservoirs en résines synthétiques de polyoléfines pour carburants.

3. Utilisation selon les revendications 1 et 2, caractérisée en ce que le vernis a, à 23°C, une viscosité de 100 à 1 000 mPa.s.

4. Réservoir pour carburants en résines synthétiques de polyoléfines, caractérisé par un revêtement intérieur d'un vernis à base de polyurée, lequel a été appliqué par utilisation d'un vernis durcissable sous l'action d'humidité, ayant à 23°C une viscosité de 60 à 2 500 mPa.s et consistant en :
a) au moins un polyisocyanate pour vernis liquide à température ambiante, contenant des groupes biuret, isocyanurate, uretdione et/ou allophanate, à base de l'hexaméthylènediisocyanate, à une teneur en NCO d'au moins 10 % en poids,
b) 0 à 5 % en poids, par rapport au mélange total, de solvants pour vernis, inertes à l'égard des groupes isocyanates, et le cas échéant
c) des produits auxiliaires et additifs usuels dans les compositions de vernis à base de polyisocyanate, inertes à l'égard des groupes isocyanates,
et durcissement subséquent des révêtements sous l'action de l'humidité.
